# EUROPEAN PATENT SPECIFICATION

(11) **EP 0 623 650 B1**
(45) Date of publication and mention of the grant of the patent: **22.10.1997**
(21) Application number: 94106378.6
(22) Date of filing: 25.04.1994
(51) Int. Cl.: C08L 9/00, B60C 1/00

(54) **Tire with tread containing silica reinforcement**
Reifen und mit Kieselsäure verstärkte Lauffläche
Pneu avec bande de roulement renforcée par de la silice

(30) Priority: 05.05.1993 US 57134
(43) Date of publication of application: 09.11.1994
(73) Proprietor: THE GOODYEAR TIRE & RUBBER COMPANY, Akron, Ohio 44316-0001 (US)
(72) Inventor: Sandstrom, Paul Harry, Tallmadge, Ohio 44278 (US); Zanzig, David John, Uniontown, Ohio 44685 (US); Verthe, John Joseph Andre, Kent, Ohio 44240 (US); Crawford, Michael Jullian, Akron, Ohio 44303 (US)
(74) Representative: Leitz, Paul

(56) References cited:
- EP-A- 0 477 682
- EP-A- 0 524 339

## Description

### Field

This invention relates to a tire having a rubber tread which is reinforced with silica. In one aspect, the tread is comprised of a specified multiple component rubber blend reinforced with a quantitative amount of silica or a combination of silica and carbon black.

### Background

Pneumatic rubber tires are conventionally prepared with a rubber tread which can be a blend of various rubbers which is typically reinforced with carbon black.

In one aspect, rubbers are evaluated, selected and blended for a purpose of achieving desired tire tread properties and particularly a balance of tire tread characteristic properties, mainly, rolling resistance, traction and wear.

For various applications utilizing rubber including applications such as tires and particularly tire treads, sulfur cured rubber is utilized which contains substantial amounts of reinforcing filler(s). Carbon black is commonly used for such purpose and normally provides or enhances good physical properties for the sulfur cured rubber. Particulate silica is also sometimes used for such purpose, particularly when the silica is used in conjunction with a coupling agent. In some cases, a combination of silica and carbon black is utilized for reinforcing fillers for various rubber products, including treads for tires.

It is important to appreciate that, conventionally, carbon black is considered to be a more effective reinforcing filler for rubber tire treads than silica if the silica is used without a coupling agent.

Indeed, at least as compared to carbon black, there tends to be a lack of, or at least an insufficient degree of, physical and/or chemical bonding between the silica particles and the rubber elastomers to enable the silica to become a reinforcing filler for the rubber for most purposes, including tire treads, if the silica is used without a coupler. While various treatments and procedures have been devised to overcome such deficiencies, compounds capable of reacting with both the silica surface and the rubber elastomer molecule, generally known to those skilled in such art as coupling agents, or couplers, are often used. Such coupling agents, for example, may be premixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents are generally composed of a silane which has a constituent component, or moiety, (the silane portion) capable of reacting with the silica surface and, also, a constituent component, or moiety, capable of reacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

In one aspect, the silane of the coupling agent apparently forms a bond to the silica surface, possibly through hydrolysis, and the rubber reactive component of the coupling agent combines with the rubber itself. Usually the rubber reactive component of the coupler is temperature sensitive and tends to combine with the rubber during the final and higher temperature sulfur vulcanization stage and, thus, subsequent to the rubber/silica/coupler mixing stage and, therefore, after the silane group of the coupler has combined with the silica. However, partly because of typical temperature sensitivity of the coupler, some degree of combination, or bonding, may occur between the rubber-reactive component of the coupler and the rubber during an initial rubber/silica/coupler mixing stage and, thus, prior to a subsequent vulcanization stage.

The rubber-reactive group component of the coupler may be, for example, one or more of groups such as mercapto, amino, vinyl, epoxy, and sulfur groups, preferably a sulfur or mercapto moiety and more preferably sulfur.

Numerous coupling agents are taught for use in combining silica and rubber, such as for example, silane coupling agents containing a polysulfide component, or structure, such as bis-(3-triethoxysilylpropyl) tetrasulfide.

For silica reinforced tire treads, US-A- 5,066,721, in its Comparative Test Example 1 in Table 3 (column 15), discloses the use of solution polymerization prepared SBR containing 50 parts silica for a tire tread. Table 4 (column 17) illustrates the tire preparation. EP-A- 501227 also discloses the use of a solution polymerization prepared SBR which is silica reinforced and in which is preferenced over an emulsion polymerization prepared SBR. US-A- 4,519,430 discloses a silica rich tire tread which contains solution or emulsion SBR, optionally with polybutadiene rubber and/or polyisoprene rubber together with a mixture of silica and carbon black, with silica being required to be a major component of the silica/carbon black reinforcing filler. EP-A- 524 339 describes a pneumatic tire with a tread composed of a blend of 3,4-polyisoprene rubber, cis 1,4-polyisoprene rubber and at least one additional diene based rubber.

Other patents relating to silicas and silica reinforced tire treads include US-A- 3,451,458; 3,664,403; 3,768,537; 3,884,285; 3,938,574; 4,482,663; 4,590,052; 5,089,554 and GB-A- 1,424,503.

### Summary and Practice of the Invention

In accordance with this invention, a pneumatic tire is provided having a sulfur vulcanized tread comprised of, based on 100 parts by weight rubber, (A) at least three diene-based elastomers comprised of (i) 10 to about 80, preferably 15 to 60, or 40 to 80, phr of emulsion polymerization prepared styrene/butadiene copolymer rubber containing 20 to 45 percent, 35 to 45 percent where 3,4-polyisoprene is not used, styrene, (ii) 0 to 30, preferably 10 to 30, phr of 3,4-polyisoprene rubber having a Tg in a range of -15°C to -25°C, (iii) 0 to 30, preferably 10 to 30, phr of a cis 1,4-polybutadiene rubber, and (iv) 10 to 30 phr of cis 1,4-polyisoprene natural rubber, (B) 50 to 110, preferably 60 to 85, phr particulate silica, (C) at least one silica coupler having a silane moiety reactive with silicon dioxide and a sulfur moiety reactive with said elastomer, in a weight ratio of silica to coupler of 7/1 to 15/1, and (D) 0 to 50 phr carbon black, wherein the weight ratio of silica to carbon black, if carbon black is used, is at least 2/1 and preferably at least 4/1 and where the total of silica and carbon black, if used, is 60 to 120, preferably 70 to 90 phr.

In one aspect of the invention, a pneumatic tire is provided having a sulfur vulcanized tread comprised of, based on 100 parts by weight rubber, (A) diene-based elastomers comprised of (i) 15 to 60 phr of emulsion polymerization prepared styrene/butadiene copolymer rubber containing 20 to 45 percent styrene, (ii) 10 to 30 phr of a 3,4-polyisoprene rubber having a Tg in a range of -15°C to -25°C, (iii) 10 to 30 phr of a cis 1,4-polybutadiene rubber, and (iv) 10 to 30 phr of cis 1,4-polyisoprene natural rubber, (B) 50 to 85, preferably 60 to 85, phr particulate silica, (C) at least one silica coupler having a silane moiety reactive with silicon dioxide and a sulfur moiety reactive with said elastomer, in a weight ratio of silica to coupler of 7/1 to 15/1, and (D) 0 to 50 phr carbon black, wherein the weight ratio of silica to carbon black, if carbon black is used, is at least 2/1, preferably at least 4/1 and for some applications at least 10/1 and where the total of silica and carbon black, if carbon black is used, is 60 to 120, preferably 70 to 90 phr.

In one aspect of the invention, a pneumatic tire is provided having a sulfur vulcanized tread comprised of, based on 100 parts by weight rubber, (A) diene-based elastomers comprised of (i) 40 to 80 phr of emulsion polymerization prepared styrene/butadiene copolymer rubber containing 35 to 45 percent styrene, (ii) 10 to 30 phr of a cis 1,4-polybutadiene rubber, and (iii) 10 to 30 phr of cis 1,4-polyisoprene natural rubber, (B) 50 to 85, preferably 60 to 85, phr particulate silica, (C) at least one silica coupler having a silane moiety reactive with silicon dioxide and a sulfur moiety reactive with said elastomer, in a weight ratio of silica to coupler of 7/1 to 15/1, and (D) 0 to 50 phr carbon black, wherein the weight ratio of silica to carbon black, if carbon black is used, is at least 2/1, preferably at least 4/1 and for some applications at least 10/1 and where the total of silica and carbon black, if carbon black is used, is 60 to 120, preferably 70 to 90 phr.

In one aspect of the invention, a pneumatic tire is provided having a sulfur vulcanized tread comprised of, based on 100 parts by weight rubber, (A) diene-based elastomers comprised of (i) 40 to 80 phr of emulsion polymerization prepared styrene/butadiene copolymer rubber containing 20 to 45 percent styrene, (ii) 10 to 30 phr of a 3,4-polyisoprene rubber having a Tg in a range of -15°C to -25°C, isoprene/butadiene copolymer rubber containing 30 to 70, preferably 40 to 60 weight percent isoprene, and (iii) 10 to 30 phr of cis 1,4-polyisoprene natural rubber, (B) 50 to 85, preferably 60 to 85, phr particulate silica, (C) at least one silica coupler having a silane moiety reactive with silicon dioxide and a sulfur moiety reactive with said elastomer, in a weight ratio of silica to coupler of 7/1 to 15/1, and (D) 0 to 50 phr carbon black, wherein the weight ratio of silica to carbon black, if carbon black is used, is at least 2/1, preferably at least 4/1 and for some applications at least 10/1 and where the total of silica and carbon black, if carbon black is used, is 60 to 120, preferably 70 to 90 phr.

The term "phr" as used herein, and according to conventional practice, refers to "parts of a respective material per 100 parts by weight of rubber".

The rubber blends containing at least three rubbers is an important feature of the invention designed to enhance properties of a tire tread containing a substantial amount of silica reinforcement.

In one aspect, the emulsion polymerization styrene/butadiene (E-SBR) is required to have a medium to relatively high styrene content. Such SBR is referred to herein as an E-SBR. The relatively high styrene content for the E-SBR is considered beneficial to enhance traction, or skid resistance, for the tire tread. The presence of the emulsion polymerization prepared SBR itself is considered beneficial to enhance processability of the uncured elastomer composition mixture, especially in comparison to a utilization of a solution polymerization prepared SBR.

By emulsion polymerization prepared E-SBR, it is meant that styrene and 1,3-butadiene are copolymerized as an aqueous emulsion. Such are well known to those skilled in such art.

The 3,4-polyisoprene rubber (3,4-PI) is considered beneficial to enhance the tire's traction.

The 3,4-PI and use thereof is more fully described in US-A- 5,087,668. The Tg refers to the glass transition temperature which can conveniently be determined by a differential scanning calorimeter at a heating rate of 10°C per minute.

The cis 1,4-polybutadiene rubber (BR) is considered to be beneficial to enhance the tire tread's wear, or treadwear.

Such BR can be prepared, for example, by organic solution polymerization of 1,3-butadiene.

The BR may be conventionally characterized, for example, by having at least a 90% cis 1,4-content.

The cis 1,4-polyisoprene natural rubber is well known to those having skill in the rubber art.

Thus, in the practice of this invention, a balanced rubber blend of at least three rubbers is provided which relies upon silica reinforcement which, in turn, relies on a silica coupler for the silica's reinforcing effect for the rubber blend.

In another aspect, when such sulfur vulcanized rubber tread also may contain carbon black a weight ratio of silica to carbon black is at least 2/1, preferably at least 4/1 and for some applications at least 10/1.

The commonly employed siliceous pigments used in rubber compounding applications can be used as the silica in this invention, including pyrogenic and precipitated siliceous pigments (silica), although precipitate silicas are preferred.

The siliceous pigments preferably employed in this invention are precipitated silicas such as, for example, those obtained by the acidification of a soluble silicate, e.g., sodium silicate.

The siliceous pigment (silica) should, for example, have an ultimate particle size in a range of 50 to 10,000 angstroms, preferably between 50 and 400 angstroms. The BET surface area of the pigment, as measured using nitrogen gas, is preferably in the range of 50 to 300, preferably 120 to 200, square meters per gram. The BET method of measuring surface area is described in the Journal of the American Chemical Society, Volume 60, page 304 (1930).

The silica also typically has a dibutylphthalate (DBP) absorption value in a range of 100 to 400, and usually 150 to 300.

The silica might be expected to have an average ultimate particle size, for example, in a range of 0.01 to 0.05 micron as determined by the electron microscope, although the silica particles may be even smaller in size.

While the "projected" area of silicas, before and after mixing with rubber, has been sometimes taught to be suitable to characterize various silicas, it is considered that such characterizations are insufficient, or unreliable unless adequate sample preparation is designated and defined because the electron microscope determination of projected area of the silica is considered to be largely dependent upon sample preparation. Preparation variables include sample container size and mixing energy and need to be clarified in complete detail.

Various commercially available silicas may be considered for use in this invention such as, for example only and without limitation, silicas commercially available from PPG Industries under the Hi-Sil trademark with designations 210, 243, etc; silicas available from Rhone-Poulenc, with designations of Z1165MP and Z165GR and silicas available from Degussa AG with designations VN2 and VN3, etc. The PPG Hi-Sil silicas are preferred.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized materials (rubbers), the additives mentioned above are selected and commonly used in conventional amounts.

Typically additions of carbon black, for this invention, if used, are hereinbefore set forth. Typical amounts of tackifier resins, if used, comprise 0.5 to 10 phr, usually 1 to 5 phr. Typical amounts of processing aids comprise 1 to 50 phr. Such processing aids can include, for example, aromatic, naphthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to about 8 phr, with a range of from 1.5 to 2.5, sometimes from 2 to 2.5, being preferred.

Accelerators are used to control the time and/or temperature required for vulcanization and to improve the properties of the vulcanizate. Retarders are also used to control the rate of vulcanization. In one embodiment, a single accelerator system may be used, i.e., primary accelerator. Conventionally and preferably, a primary accelerator(s) is used in total amounts ranging from 0.5 to 4, preferably 0.8 to 1.5, phr. In another embodiment, combinations of a primary and a secondary accelerator might be used, with the secondary accelerator being used in amounts of 0.05 to 3 phr, for example, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the use of silica as a reinforcing filler in combination with a coupling agent.

The presence and relative amounts of the above additives are not considered to be an aspect of the present invention which is more primarily directed to the utilization of specified blends of rubbers in tire treads, in combination with silica and silica coupler.

The tire can be built, shaped, molded and cured by various methods which will be readily apparent to those having skill in such art.

The invention may be better understood by reference to the following examples in which the parts and percentages are by weight unless otherwise indicated.

### EXAMPLE I

Rubber compositions (compounded rubber) were prepared of various blends of three or more of E-SBR with a relatively high styrene content, 3,4-polyisoprene rubber (3,4-PI), cis 1,4-polybutadiene rubber (BR) and cis 1,4-polyisoprene natural rubber (NR) and referred to herein as Sample X and Sample Y. Sample Z is a control.

The rubber compositions were prepared by mixing the ingredients in several stages, namely, two non-productive stages (without the curatives) and a productive stage (basically for the curatives), then the resulting composition was cured under conditions of elevated temperature and pressure.

For the non-productive mixing stages, exclusive of the accelerator(s), sulfur curatives, zinc oxide and antioxidant which are mixed (added) in the final, productive mixing stage, all of the ingredients were mixed in the first non-productive stage except for 20 to 50 percent of the reinforcing fillers (silica or carbon black), with proportional amounts (to the reinforcing fillers) of coupler and processing oil, which were added in the second non-productive mixing stage. The ingredients were mixed in each of the non-productive mixing stages for about 3 minutes to a temperature of about 150°C, all in a Banbury type of mixer. To the resulting rubber composition (mixture) was then mixed, in the productive mixing stage, the remaining ingredients in a Banbury type mixer for about 3 minutes to a temperature of about 120°C. The rubber was then vulcanized at a temperature of about 150°C for about 18 minutes.

The rubber composition was comprised of the ingredients illustrated in Table 1. Table 2 illustrates properties of the cured rubber composition.

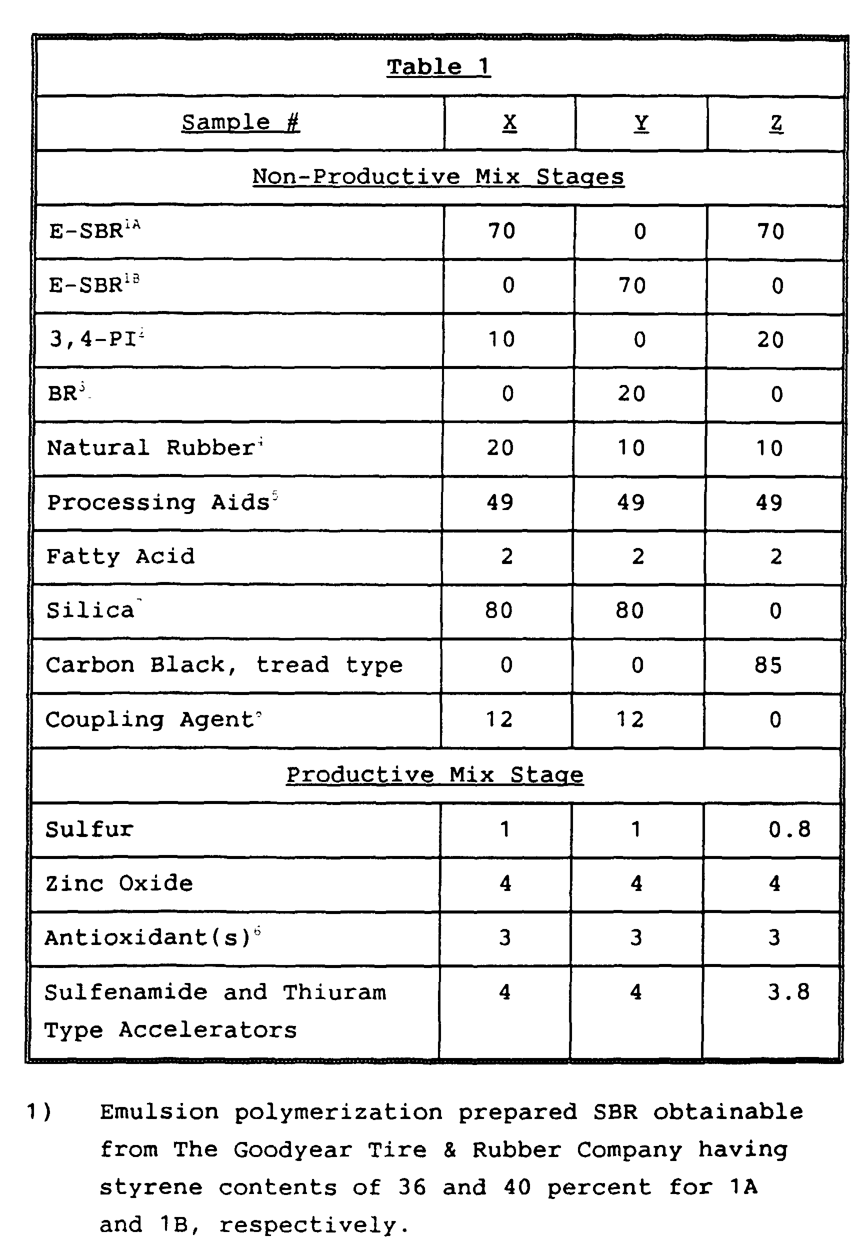

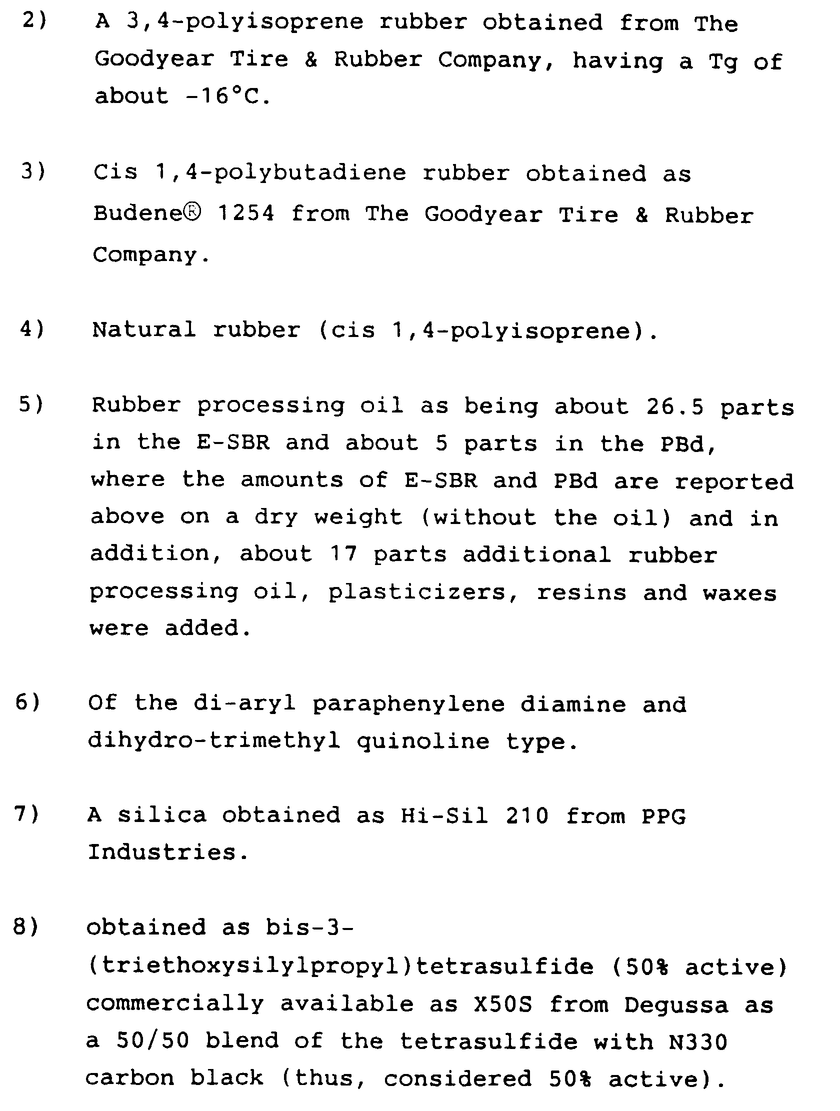

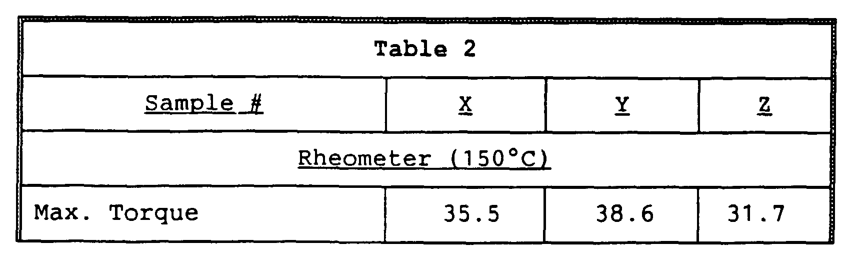

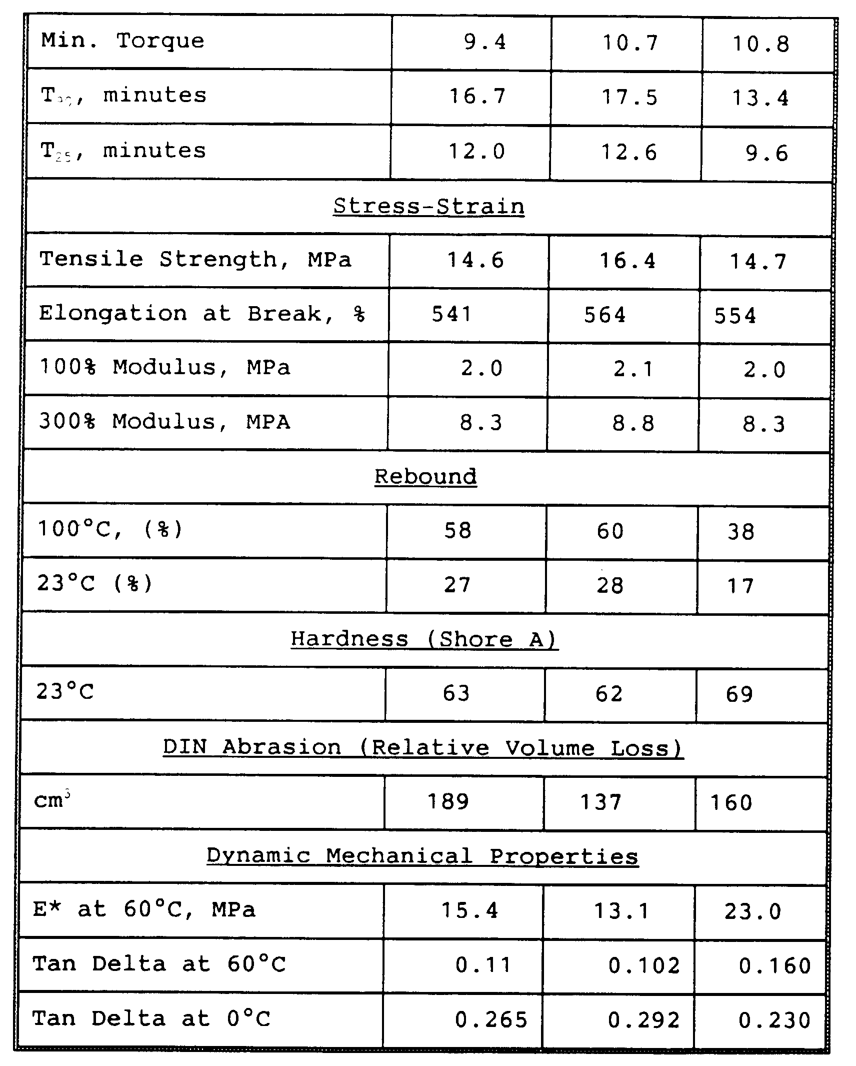

These properties of the rubber compositions demonstrate that anticipated rolling resistance and traction for a tire with tread of Sample X and of Sample Y would be superior to those of Sample Z, which is considered a control. Sample Y also demonstrates an improved abrasion resistance which is predictive of improved treadwear.

## Claims

1. A pneumatic tire having a sulfur vulcanized tread comprised of, based on 100 parts by weight rubber,
- (A) at least three diene-based elastomers comprised of (i) 10 to 80 phr of emulsion polymerization prepared styrene/butadiene copolymer rubber containing 20 to 45 percent, 35 to 45 percent where 3,4-polyisoprene rubber is not used, styrene, (ii) 0 to 30 phr of a 3,4-polyisoprene rubber having a Tg in a range of -15°C to -25°C, (iii) 0 to 30 phr of a cis 1,4-polybutadiene rubber, and (iv) 10 to 15 phr of cis 1,4-polyisoprene natural rubber;
- (B) 50 to 110 phr particulate silica;
- (C) at least one silica coupler having a silane moiety reactive with silicon dioxide and a sulfur moiety reactive with said elastomer, in a weight ratio of silica to coupler of 7/1 to 15/1, and
- (D) 0 to 50 phr carbon black, wherein the weight ratio of silica to carbon black, if carbon black is used, is at least 2/1 where the total of silica and carbon black, if carbon black is used, is 60 to 120 phr.

2. A pneumatic tire having a sulfur vulcanized tread comprised of, based on 100 parts by weight rubber,
- (A) diene-based elastomers comprised of (i) 15 to 60 phr of emulsion polymerization prepared styrene/butadiene copolymer rubber containing 20 to 45 percent styrene, (ii) 10 to 30 phr of a 3,4-polyisoprene rubber having a Tg in a range of -15°C to -25°C, (iii) 10 to 30 phr of a cis 1,4-polybutadiene rubber, and (iv) 10 to 30 phr of cis 1,4-polyisoprene natural rubber;
- (B) 60 to 85 phr particulate silica;
- (C) at least one silica coupler having a silane moiety reactive with silicon dioxide and a sulfur moiety reactive with said elastomer in a weight ratio of silica to coupler of 7/1 to 15/1; and
- (D) 0 to 50 phr carbon black, wherein the weight ratio of silica to carbon black, if carbon black is used, is at least 4/1 where the total of silica and carbon black, if carbon black is used, is 70 to 90 phr.

3. The tire of claims 1 or 2 where said silica is characterized by having a BET surface area in a range of 50 to 300 and a DBP absorption value in a range of 100 to 400.

4. A pneumatic tire having a sulfur vulcanized tread comprised of, based on 100 parts by weight rubber;
- (A) diene-based elastomers comprised of (i) 40 to 80 phr of emulsion polymerization prepared styrene/ butadiene copolymer rubber containing 35 to 45 percent styrene, (ii) 10 to 30 phr of a cis 1,4-polybutadiene rubber, and (iii) 10 to 30 phr of cis 1,4-polyisoprene natural rubber,
- (B) 50 to 85 phr particulate silica;
- (C) at least one silica coupler having a silane moiety reactive with silicon dioxide and a sulfur moiety reactive with said elastomer in a weight ratio of silica to coupler of 7/1 to 15/1, and
- (D) from 0 to 50 phr carbon black, wherein the weight ratio of silica to carbon black, if carbon black is used, is at least 4/1 where the total of silica and carbon black, if carbon black is used, is 60 to 120 phr.

5. A pneumatic tire having a sulfur vulcanized tread comprised of, based on 100 parts by weight rubber,
- (A) at least three diene-based elastomers comprised of (i) 40 to 80 phr of emulsion polymerization prepared styrene/butadiene copolymer rubber containing 20 to 45 percent styrene, (ii) 10 to 30 phr of a 3,4-polyisoprene rubber having a Tg in a range of -15°C to -25°C, and (iii) 10 to 30 phr of a cis 1,4-polybutadiene rubber, and (iv) 10 to 15 phr of cis 1,4-polyisoprene natural rubber;
- (B) 50 to 85 phr particulate silica;
- (C) at least one silica coupler having a silane moiety reactive with silicon dioxide and a sulfur moiety reactive with said elastomer, in a weight ratio of silica to coupler of 7/1 to 15/1, and
- (D) 0 to 50 phr carbon black, wherein the weight ratio of silica to carbon black, if carbon black is used, is at least 4/1 where the total of silica and carbon black, if carbon black is used, is 60 to 120 phr.

6. The tire of claims 4 or 5 where said silica is characterized by having a BET surface area in a range of 120 to 200 and a DBP absorption value in a range of 150 to 300.

7. The tire of any of claims 1-6 where the said coup-ler is a bis-3-(triethoxysilylpropyl)tetrasulfide.

8. The tire of any of claims 1-7 where carbon black is used and the weight ratio of silica to carbon black is at least 10/1.

9. The tire of claim 1 where the carbon black is used and the weight ratio of silica to carbon black is at least 2/1.

10. The tire of claims 2 and 4-6 where carbon black is used and the weight ratio of silica to carbon black is at least 4/1.

## Patentansprüche

1. Luftreifen mit einer Schwefel-vulkanisierten Lauffläche, welche bezogen auf 100 Gewichtsteile Kautschuk
- (A) mindestens drei Elastomere auf Dien-Basis, die (i) 10 bis 80 ThK eines durch Emulsionspolymerisation hergestellten Styrol/Butadien-Copolymerkautschuks, der 20 bis 45%, 35 bis 45%, wenn 3,4-Polyisopren-Kautschuk nicht verwendet wird, Styrol enthält, (ii) 0 bis 30 ThK eines 3,4-Polyisopren-Kautschuks mit einer Tg im Bereich von -15°C bis -25°C, (iii) 0 bis 30 ThK eines cis-1,4-Polybutadien-Kautschuks und (iv) 10 bis 15 ThK cis-1,4-Polyisopren-Naturkautschuk umfassen;
- (B) 50 bis 110 ThK teilchenförmige Kieselsäure;
- (C) mindestens ein Kieselsäure-Kupplungsmittel mit einer mit Siliciumdioxid reaktiven Silan-Einheit und einer mit dem Elastomer reaktiven Schwefel-Einheit in einem Gewichtsverhältnis von Kieselsäure zu Kupplungsmittel von 7/1 bis 15/1; und
- (D) 0 bis 50 ThK Ruß, worin das Gewichtsverhältnis von Kieselsäure zu Ruß, wenn Ruß verwendet wird, mindestens 2/1 beträgt, wobei die Summe von Kieselsäure und Ruß, wenn Ruß verwendet wird, 60 bis 120 ThK beträgt;
umfaßt.

2. Luftreifen mit einer Schwefel-vulkanisierten Lauffläche, welche bezogen auf 100 Gewichtsteile Kautschuk
(A) Elastomere auf Dien-Basis, die (i) 15 bis 60 ThK durch Emulsionspolymerisation hergestellten Styrol/Butadien-Copolymerkautschuk, der 20 bis 45% Styrol enthält, (ii) 10 bis 30 ThK eines 3,4-Polyisopren-Kautschuks mit einer Tg im Bereich von -15°C bis -25°C, (iii) 10 bis 30 ThK eines cis-1,4-Polybutadien-Kautschuks, und (iv) 10 bis 30 ThK cis-1,4-Polyisopren-Naturkautschuk umfassen;
- (B) 60 bis 85 ThK teilchenförmige Kieselsäure;
- (C) mindestens ein Kieselsäure-Kupplungsmittel mit einer mit Siliciumdioxid reaktiven Silan-Einheit und einer mit dem Elastomer reaktiven Schwefel-Einheit in einem Gewichtsverhältnis von Kieselsäure zu Kupplungsmittel von 7/1 bis 15/1; und
- (D) 0 bis 50 ThK Ruß, worin das Gewichtsverhältnis von Kieselsäure zu Ruß, wenn Ruß verwendet wird, mindestens 4/1 beträgt, wobei die Summe von Kieselsäure und Ruß, wenn Ruß verwendet wird, 70 bis 90 ThK beträgt;
umfaßt.

3. Reifen nach Anspruch 1 oder 2, worin die Kieselsäure dadurch gekennzeichnet ist, daß sie eine BET-Oberfläche im Bereich von 50 bis 300 und einen DBP-Absorptionswert im Bereich von 100 bis 400 aufweist.

4. Luftreifen mit einer Schwefel-vulkanisierten Lauffläche, welche bezogen auf 100 Gewichtsteile Kautschuk;
- (A) Elastomere auf Dien-Basis, die (i) 40 bis 80 ThK durch Emulsionspolymerisation hergestellten Styrol/Butadien-Copolymerkautschuk, der 35 bis 45% Styrol enthält, (ii) 10 bis 30 ThK eines cis-1,4-Polybutadien-Kautschuks, (iii) 10 bis 30 ThK cis-1,4-Polyisopren-Naturkautschuk umfassen;
- (B) 50 bis 85 ThK teilchenförmige Kieselsäure;
- (C) mindestens ein Silan-Kupplungsmittel mit einer mit Siliciumdioxid reaktiven Silan-Einheit und einer mit dem Elastomer reaktiven Schwefel-Einheit in einem Gewichtsverhältnis von Kieselsäure zu Kupplungsmittel von 7/1 bis 15/1; und
- (D) 0 bis 50 ThK Ruß, worin das Gewichtsverhältnis von Kieselsäure zu Ruß, wenn Ruß verwendet wird, mindestens 4/1 beträgt, wobei die Summe von Kieselsäure und Ruß, wenn Ruß verwendet wird, 60 bis 120 ThK beträgt;
umfaßt.

5. Luftreifen mit einer Schwefel-vulkanisierten Lauffläche, welche bezogen auf 100 Gewichtsteile Kautschuk
- (A) mindestens drei Elastomere auf Dien-Basis, die (i) 40 bis 80 ThK durch Emulsionspolymerisation hergestellten Styrol/Butadien-Copolymerkautschuk, der 20 bis 45% Styrol enthält, (ii) 10 bis 30 ThK eines 3,4-Polyisopren-Kautschuks mit einer Tg im Bereich von -15°C bis -25°C und (iii) 10 bis 30 ThK eines cis-1,4-Polybutadien-Kautschuks und (iv) 10 bis 15 ThK cis-1,4-Polyisopren-Naturkautschuk umfassen;
- (B) 50 bis 85 ThK teilchenförmige Kieselsäure;
- (C) mindestens ein Kieselsäure-Kupplungsmittel mit einer mit Siliciumdioxid reaktiven Silan-Einheit und einer mit dem Elastomer reaktiven Schwefel-Einheit in einem Gewichtsverhältnis von Kieselsäure zu Kupplungsmittel von 7/1 bis 15/1; und
- (D) 0 bis 50 ThK Ruß, worin das Gewichtsverhältnis von Kieselsäure zu Ruß, wenn Ruß verwendet wird, mindestens 4/1 beträgt, wobei die Summe von Kieselsäure zu Ruß, wenn Ruß verwendet wird, 60 bis 120 ThK beträgt;
umfaßt.

6. Reifen nach Anspruch 4 oder 5, worin die Kieselsäure dadurch gekennzeichnet ist, daß sie eine BET-Oberfläche im Bereich von 120 bis 200 und einen DBP-Absorptionswert im Bereich von 150 bis 300 aufweist.

7. Reifen nach irgendeinem der Ansprüche 1-6, worin das Kupplungsmittel ein Bis-3-(triethoxysilylpropyl)tetrasulfid ist.

8. Reifen nach irgendeinem der Ansprüche 1-7, worin Ruß verwendet wird und das Gewichtsverhältnis von Kieselsäure zu Ruß mindestens 10/1 beträgt.

9. Reifen nach Anspruch 1, worin der Ruß verwendet wird und das Gewichtsverhältnis von Kieselsäure zu Ruß mindestens 2/1 beträgt.

10. Reifen nach den Ansprüchen 2 und 4-6, worin Ruß verwendet wird und das Gewichtsverhältnis von Kieselsäure zu Ruß mindestens 4/1 beträgt.

## Revendications

1. Bandage pneumatique possédant une bande de roulement vulcanisée au soufre, comprenant, basés sur 100 parties en poids de caoutchouc,
- (A) au moins trois élastomères à base diénique comprenant (i) de 10 à 80 phr d'un caoutchouc de copolymère de styrène/butadiène préparé par polymérisation en émulsion contenant de 20 à 45 pour cent, de 35 à 45 pour cent lorsqu'on n'utilise pas du caoutchouc de 3,4-polyisoprène, de styrène, (ii) de 0 à 30 phr d'un caoutchouc de 3,4-polyisoprène possédant une Tg dans le domaine de -15°C à -25°C, (iii) de 0 à 30 phr d'un caoutchouc de cis-1,4-polybutadiène et (iv) de 10 à 15 phr d'un caoutchouc naturel de cis-l,4-polyisoprène;
- (B) de 50 à 110 phr de silice particulaire;
- (C) au moins un agent de couplage de silice possédant une fraction de silane réactive avec du dioxyde de silicium et une fraction de soufre réactive avec ledit élastomère dans un rapport pondéral de la silice à l'agent de couplage de 7/1 à 15/1; et
- (D) de 0 à 50 phr de noir de carbone, le rapport pondéral de la silice au noir de carbone, si l'on utilise du noir de carbone, étant d'au moins 2/1, la quantité totale de silice et de noir de carbone, si l'on utilise du noir de carbone, étant de 60 à 120 phr.

2. Bandage pneumatique possédant une bande de roulement vulcanisée au soufre, comprenant, basés sur 100 parties en poids de caoutchouc,
- (A) des élastomères à base diénique comprenant (i) de 15 à 60 phr d'un caoutchouc de copolymère de styrène/butadiène préparé par polymérisation en émulsion contenant de 20 à 45 pour cent de styrène, (ii) de 10 à 30 phr d'un caoutchouc de 3,4-polyisoprène possédant une Tg dans le domaine de -15°C à -25°C, (iii) de 10 à 30 phr d'un caoutchouc de cis-1,4-polybutadiène et (iv) de 10 à 30 phr d'un caoutchouc naturel de cis-l,4-polyisoprène;
- (B) de 60 à 85 phr de silice particulaire;
- (C) au moins un agent de couplage de silice possédant une fraction de silane réactive avec du dioxyde de silicium et une fraction de soufre réactive avec ledit élastomère dans un rapport pondéral de la silice à l'agent de couplage de 7/1 à 15/1; et
- (D) de 0 à 50 phr de noir de carbone, le rapport pondéral de la silice au noir de carbone, si l'on utilise du noir de carbone, étant d'au moins 4/1, la quantité totale de silice et de noir de carbone, si l'on utilise du noir de carbone, étant de 70 à 90 phr.

3. Pneumatique selon la revendication 1 ou 2, dans lequel ladite silice est caractérisée par le fait de posséder une aire de surface BET dans le domaine de 50 à 300 et un indice d'absorption DBP dans le domaine de 100 à 400.

4. Bandage pneumatique possédant une bande de roulement vulcanisée au soufre, comprenant, basés sur 100 parties en poids de caoutchouc,
- (A) des élastomères à base diénique comprenant (i) de 40 à 80 phr d'un caoutchouc de copolymère de styrène/butadiène préparé par polymérisation en émulsion contenant de 35 à 45 pour cent de styrène, (ii) de 10 à 30 phr d'un caoutchouc de cis-1,4-polybutadiène et (iii) de 10 à 30 phr d'un caoutchouc naturel de cis-1,4-polyisoprène;
- (B) de 50 à 85 phr de silice particulaire;
- (C) au moins un agent de couplage de silice possédant une fraction de silane réactive avec du dioxyde de silicium et une fraction de soufre réactive avec ledit élastomère dans un rapport pondéral de la silice à l'agent de couplage de 7/1 à 15/1; et
- (D) de 0 à 50 phr de noir de carbone, le rapport pondéral de la silice au noir de carbone, si l'on utilise du noir de carbone, étant d'au moins 4/1, la quantité totale de silice et de noir de carbone, si l'on utilise du noir de carbone, étant de 60 à 120 phr.

5. Bandage pneumatique possédant une bande de roulement vulcanisée au soufre, comprenant, basés sur 100 parties en poids de caoutchouc,
- (A) au moins trois élastomères à base diénique comprenant (i) de 40 à 80 phr d'un caoutchouc de copolymère de styrène/butadiène préparé par polymérisation en émulsion contenant de 20 à 45 pour cent de styrène, (ii) de 10 à 30 phr d'un caoutchouc de 3,4-polyisoprène possédant une Tg dans le domaine de -15°C à -25°C, (iii) de 10 à 30 phr d'un caoutchouc de cis-1,4-polybutadiène et (iv) de 10 à 15 phr d'un caoutchouc naturel de cis-1,4-polyisoprène;
- (B) de 50 à 85 phr de silice particulaire;
- (C) au moins un agent de couplage de silice possédant une fraction de silane réactive avec du dioxyde de silicium et une fraction de soufre réactive avec ledit élastomère dans un rapport pondéral de la silice à l'agent de couplage de 7/1 à 15/1; et
- (D) de 0 à 50 phr de noir de carbone, le rapport pondéral de la silice au noir de carbone, si l'on utilise du noir de carbone, étant d'au moins 4/1, la quantité totale de silice et de noir de carbone, si l'on utilise du noir de carbone, étant de 60 à 120 phr.

6. Pneumatique selon la revendication 4 ou 5, dans lequel ladite silice est caractérisée par le fait de posséder une aire de surface BET dans le domaine de 120 à 200 et un indice d'absorption DBP dans le domaine de 150 à 300.

7. Pneumatique selon l'une quelconque des revendications 1 à 6, dans lequel ledit coupleur est un bis-3-(triéthoxysilylpropyl)tétrasulfure.

8. Pneumatique selon l'une quelconque des revendications 1 à 7, dans lequel on utilise du noir de carbone et le rapport de la silice au noir de carbone est d'au moins 10/1.

9. Pneumatique selon la revendication 1, dans lequel on utilise du noir de carbone et le rapport pondéral de la silice au noir de carbone est d'au moins 2/1.

10. Pneumatique selon les revendications 2 et 4-6, dans lequel on utilise du noir de carbone et le rapport pondéral de la silice au noir de carbone est d'au moins 4/1.
